# EUROPÄISCHE PATENTANMELDUNG

(11) **EP 1 995 581 A2**
(43) Veröffentlichungstag der Anmeldung: **26.11.2008**
(21) Anmeldenummer: 08009360.2
(22) Anmeldetag: 21.05.2008
(51) Int. Cl.: G01L 5/28

(54) **Bremsprüfung an Kraftfahrzeugen**

(30) Priorität: 22.05.2007 DE 102007024069
(71) Anmelder: Snap-on Equipment GmbH, 64319 Pfungstadt (DE)
(72) Erfinder: Seibl, Erich, 84577 Tüssling (DE)
(74) Vertreter: Mischung, Ralf

(57) **Zusammenfassung**

Die vorliegende Erfindung betrifft ein Verfahren und eine Vorrichtung zur Verbesserung eines Bremsprüfverfahrens, bei dem eine Unrundheitsmessung durch Überbrückung einer Abschalteautomatik in die aus dem Stand der Technik bekannten Bremsverfahren integriert wird.

## Beschreibung

Die vorliegende Erfindung betrifft ein Verfahren sowie eine Vorrichtung zur Bremsprüfung an Kraftfahrzeugen nach dem Oberbegriff des Anspruchs 1.

Anhand von Bremsprüfungen an Kraftfahrzeugen soll in an sich bekannter Weise ermittelt werden, wie gut die Bremswirkung einzelner Bremsen eines Kraftfahrzeuges noch gegeben ist. Dabei wird eine üblicherweise monoton ansteigende Bremskraft an der Bremse erzeugt, während das gebremste Rad zur Rotation angetrieben wird. Erreicht die Bremskraft einen als ausreichend definierten Sollwert, so tritt zwischen Antrieb und Rad ein Schlupf bzw. eine Gleitreibung auf. Die Bremskraft nimmt ab diesem Moment nicht mehr nennenswert zu oder ab, sondern stellt sich auf einen im wesentlichen konstanten Wert ein, woraus auf die maximal erzielbare Bremsleistung der jeweiligen Fahrzeugbremse geschlossen werden kann. Zur Vermeidung von unnötigem Verschleiß der Fahrzeugreifen in dieser Situation ist vorgesehen, die Bremsprüfung bei Eintritt des Schlupfes bzw. der Gleitreibung nach einer festlegbaren Zeitspanne zu beenden, wobei insbesondere die aufgebrachte Bremskraft weggenommen wird.

Derartige Bremsprüfstände sind aus dem Stand der Technik bekannt. Neben der reinen Prüfung der Bremsleistung wird vielfach gewünscht, die Bremsen auch auf Unrundheiten zu überprüfen. Derartige Unrundheiten an Scheiben- oder auch Trommelbremsen sind gekennzeichnet durch schwankendes Bremsverhalten bei im Wesentlichen konstant aufgebrachter Bremskraft.

Aufgabe der vorliegenden Erfindung ist es, ein Verfahren zur Bremsprüfung an Kraftfahrzeugen anzubieten, welches auch zur Prüfung auf Unrundheiten ausgebildet ist. Aufgabe ist es weiterhin, eine Vorrichtung zur Durchführung dieses Verfahrens anzubieten.

Erfindungsgemäß wird die Überprüfung auf Unrundheiten durchgeführt, indem eine im Wesentlichen konstante Bremskraft über eine vorgegebene Zeitspanne aufgebracht wird. Liegen an den Bremskomponenten Unrundheiten vor, so zeigen sich diese durch eine schwankende Bremsleistung während einer Umdrehung des Rades. In Verbindung mit den aus dem Stand der Technik bereits bekannten Bremsprüfständen ergibt sich dabei das Problem, dass eine im Wesentlichen konstante Bremskraft bisher als Übergang von der Haftreibung in die Gleitreibung nach Erreichen der maximalen Bremsleitung interpretiert wurde und zur Verschleißvermeidung unmittelbar die Abschaltung der Bremsprüfung durch die Steuerung des Prüfstandes zur Folge hatte. Wird in einem solchen System die Bremskraft zum Zweck der Unrundheit-Messung über einen vorgegebenen Zeitpunkt im Wesentlichen konstant gehalten, so erfolgt aus vorgenanntem Grund auch dann die Abschaltung der Bremsprüfung, wenn Schlupf oder Gleitreibung tatsächlich noch nicht vorliegen. Damit ist die Kombination einer Unrundheitsprüfung mit den bekannten Bremsprüfständen nach dem Stand der Technik nicht möglich.

Der der Erfindung zu Grunde liegende Gedanke beruht auf der Idee, die Abschaltung der Bremsprüfung bei im Wesentlichen konstanter Bremskraft dann zu unterdrücken, wenn die Bremskraft während einer vorgebbaren Zeitspanne innerhalb wenigstens eines vorgebbaren Bremskraft-Wertebereichs liegt. Mit anderen Worten: Es wird ein Wertebereich in Form einer Ober- und Untergrenze der Bremskraft definiert und die automatische Abschaltung der Bremsprüfung (wegen vermeintlich eintretender Gleitreibung und daraus resultierender konstanter Bremskraft) unterdrückt, solange die aufgebrachte Bremskraft innerhalb dieses Wertebereichs liegt.

Der erfinderische Effekt ergibt sich wie folgt: Für die Durchführung einer Bremsprüfung sei ein "Fenster" definiert, welches beispielsweise für die Zeit t = 1s bis t = 5s und eine Bremskraft zwischen 0 kN und 2 kN gelten soll. Bei Durchführung der Bremsprüfung liegt es im Ermessen des Bedieners, die Bremskraft nach seiner Wahl aufzubringen und ihren Verlauf (also die Bremskraft in Abhängigkeit von der Zeit t) frei zu wählen. Weiterhin obliegt es dem Bediener, durch Konstanthalten der Bremskraft die Prüfung auf Unrundheit einzuleiten, um eine schwankende Bremswirkung bei im Wesentlichen konstanter Bremskraft zu diagnostizieren.

Erfindungsgemäß soll die automatische Abschaltung der Bremsprüfung für den Fall unterbleiben, dass die vom Bediener aufgebrachte Bremskraft während der Unrundheitsmessung innerhalb des vorgenannten Fensters verläuft. Obwohl also auch in diesem Fall eine im Wesentlichen konstante Bremskraft aufgebracht wird, soll das System entgegen der sonst üblichen Steuerung keine Abschaltung vornehmen, da die konstante Bremskraft hier vom Bediener beabsichtigt ist und nicht etwa das Resultat von aufgetretener Gleitreibung bei Erreichen der maximalen Bremsleistung. Wie anhand der Figur noch deutlich werden wird, kann durch geeignete Parameter-Vorgaben auf elegante Weise sichergestellt werden, dass die Bremsprüfung während einer Unrundheitsprüfung nicht abgebrochen wird, wohingegen auftretende Gleitreibung zur sicheren und schonenden Abschaltung führt.

Eine Ausführungsform des erfindungsgemäßen Verfahrens umfasst dabei folgende Verfahrensschritte:
a) Aufbringen einer Bremskraft (F) auf wenigstens ein angetriebenes Fahrzeugrad,
b) Abschaltung der Bremsprüfung, wenn die Bremskraft (F) während einer vorgebbaren Zeitspanne (t_{B}) innerhalb einer vorgebbaren Bremskraft-Toleranzbreite (ΔF_{B}) liegt,
c) wobei die Abschaltung nach b) unterdrückt wird, solange die Bremskraft (F) während wenigstens einer vorgebbaren Zeitspanne (t_{U}) innerhalb wenigstens eines vorgebbaren Bremskraft-Wertebereichs (F_{Umin}; F_{Umax}) liegt.

Gemäß Verfahrensschritt b) wird dabei eine Toleranzbreite ΔF_{B} definiert, die für die Abschaltung der Bremsprüfung von Bedeutung ist. Insbesondere kann es sich bspw. um eine Toleranz von 0,5kN oder 0,1kN handeln. Bleibt der Wert der Bremskraft während der Zeitspanne (t_{B}) innerhalb dieser Toleranzbreite, so wird von einer im Wesentlichen konstanten Bremskraft ausgegangen und dies als Indiz für die aufgetretene Gleitreibung gewertet. Zur Schonung des Reifenmaterials oder auch der Prüfstandkomponenten soll dadurch die Abschaltung der Bremsprüfung ausgelöst werden. Die absolute Lage der Toleranzbreite ist dabei zunächst unerheblich, so dass eine im wesentlichen konstante Bremskraft von ca. 3kN ebenso zur Abschaltung führt wie bei bspw. bei 6 kN. Maßgeblich ist die "Konstanz" der Bremskraft, also deren Verlauf innerhalb der Toleranzbreite über eine Zeitspanne (t_{B}).

Erfindungsgemäß ist nun ein Wertebereich (F_{Umin}; F_{Umax}) vorgesehen, der für die Unrundheitsprüfung eine maximale und eine minimale Bremskraft festlegt. Der Wertebereich wird nur für eine bestimmte Dauer festgelegt und soll vor bzw. nach der vorgegebenen Zeitspanne (t_{U}) ungültig sein. Wenn der Bediener die Bremskraft nun so wählt, dass sie während der vorgegebenen Zeitspanne t_{U} innerhalb des Bremskraft-Wertebereichs F_{Umin}; F_{Umax} liegt, so wird zwar auch dies als eine im Wesentlichen konstante Bremskraft interpretiert werden. Zur Vermeidung der vorzeitigen Abschaltung der Bremsprüfung soll jedoch durch eine geeignete Steuerung die ansonsten vorgesehene Abschaltung unterdrückt werden, sofern die Bremskraft in dem vorgegebenen Wertebereich bzw. innerhalb der vorgegebenen Zeitspanne liegt.

Letztendlich wird innerhalb des von der Bremskraft F_{B} und der Zeit t aufgespannten Wertebereichs ein Fenster definiert, innerhalb dessen die automatische Abschaltung unterdrückt wird. Durch diese erfinderische Maßnahme kann somit während einer Bremsprüfung auch eine Unrundheitsprüfung durchgeführt werden, was Zeit und Aufwand minimiert und sich besonders kostengünstig auswirkt.

Nach einer vorteilhaften Ausführungsform der Erfindung wird die Zeitspanne t_{U} durch Vorgabe zweier fester Zeitpunkte t_{U1} und t_{U2} bestimmt. Die maßgebliche Zeitspanne t_{U}, während derer die automatische Bremsprüfungsabschaltung unterdrückt werden soll, wird dadurch nicht nur hinsichtlich ihrer Dauer, sondern auch hinsichtlich ihrer absoluten Position entlang des Zeitstrahls festgelegt. Dadurch wird sichergestellt, dass der Bediener die Unrundheitsprüfung auch innerhalb einer vorgeschriebenen Zeit (beispielsweise 10s) nach Beginn der Bremsprüfung durchzuführen hat, da andernfalls durch Konstanthaltung der Bremskraft die automatische Abschaltung der Bremsprüfung erfolgen würde. Beginn und Ende der Zeitspanne t_{U} lassen sich also beliebig, aber definiert festlegen, etwa von t_{U1} = 2s bis t_{U2} = 10s. Vor oder nach dieser Zeitspanne erfolgt die automatische Abschaltung der Bremsprüfung unabhängig von der absoluten Höhe der Bremskraft immer dann, wenn diese ihrerseits innerhalb der vorgegebenen Toleranzbreite (ΔF_{B}) liegt. Durch diese weitere Einschränkung wird das "Fenster" zur Ausbildung der Abschaltautomatik sowohl hinsichtlich der Kräfte als auch des Zeitabschnitts genau festgelegt.

Der untere absolute Grenzwert der Toleranzbreite (ΔF_{B}) liegt nach einer zweckmäßigen Ausgestaltung des erfindungsgemäßen Verfahrens oberhalb des oberen Grenzwerts F_{Umax}. Dadurch sind die beiden Bereiche, innerhalb derer eine Bremskraft als im Wesentlichen konstant detektiert wird, klar voneinander getrennt. Dies vermeidet Konflikte hinsichtlich des vorrangigen Abschalt- bzw. Überbrückungskriteriums. Grundsätzlich lassen sich die Toleranzbreite (ΔF_{B}) für die automatische Abschaltung bzw. deren Überbrückung beliebig definieren bzw. innerhalb des F-t-Diagramms anordnen, und zwar auch in überschneidender Art und Weise. Dies erlaubt größtmögliche Flexibilität bei der Verfahrensgestaltung.

Nach einer besonders vorteilhaften Ausführungsform ist die Dauer der Zeitspanne t_{U} auf einen Bereich zwischen drei und fünf Sekunden, vorzugsweise vier Sekunden festgelegt. Durch Tests wurde herausgefunden, dass diese Dauer sich optimal zur Durchführung des Bremsverfahrens eignet, um sowohl die Unrundheitsprüfung als auch die durch Gleitreibung verursachte Abschaltung zu realisieren.

Die erfindungsgemäße Vorrichtung zur Durchführung des Verfahrens zeichnet sich insbesondere durch eine Steuereinheit aus, welche zur Durchführung der Bremsprüfung und zur Ansteuerung der dazu erforderlichen Komponenten ausgebildet ist. Dabei ist die Steuereinheit insbesondere dazu ausgebildet, eine Abschaltung der Bremsprüfung (Wegnahme der Bremskraft) dann vorzunehmen, wenn die Bremskraft während einer vorgebbaren Zeitspanne t_{B} innerhalb eines vorgebbaren Toleranzbreite (ΔF_{B}) liegt. Erfindungsgemäß soll die Steuereinheit weiterhin zur Unterdrückung der Abschaltung ausgebildet sein, wenn die Bremskraft F während wenigstens einer vorgebbaren Zeitspanne (t_{U}) innerhalb wenigstens eines vorgebbaren Bremskraft-Wertebereichs (F_{Umin}; F_{Umax}) liegt.

Es versteht sich von selbst, dass die vorgenannte Erfindung Teil übergeordneter und größerer Steuerungen bzw. Vorrichtungen sein kann bzw. als Merkmalskombination in anderen Verfahren bzw. Bremsprüfständen integrierbar ist.

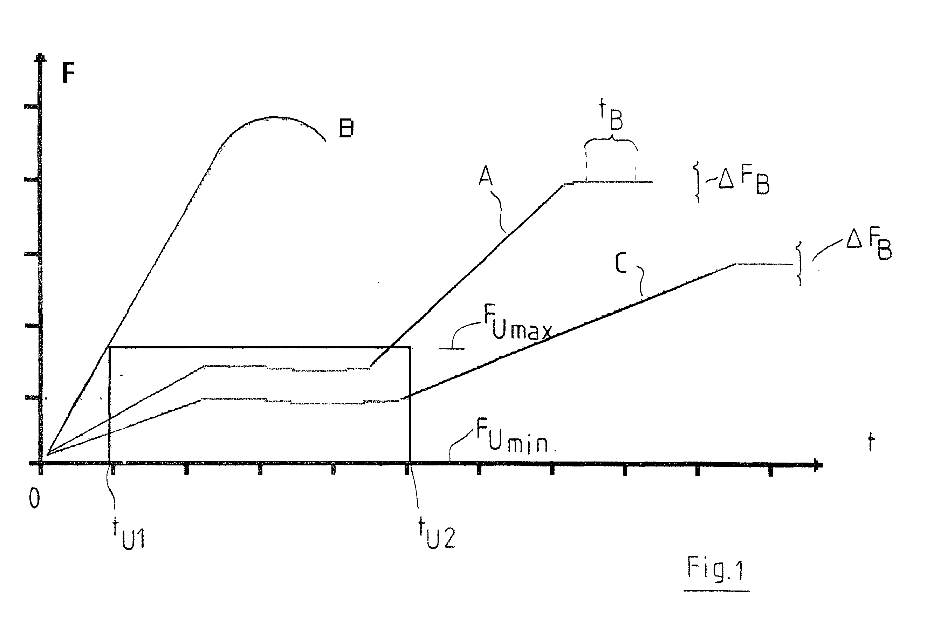

Nachfolgend soll das der Erfindung zu Grunde liegende Prinzip anhand der einzigen Figur 1 näher erläutert werden.

Die Figur 1 zeigt ein F-t-Diagramm zur Wiedergabe von Bremskraftverläufen während einer erfindungsgemäßen Bremsprüfung. Gezeigt sind dort drei Bremskraftverläufe A, B und C. Die Bremskraftverläufe ergeben sich durch Vorgabe bzw. manuelle Steuerung der Bremskraft, die während einer Bremsprüfung auf einen oder mehrere Fahrzeugreifen aufgebracht wird. Typischerweise tritt dabei ein Bediener das Bremspedal des Fahrzeugs mit zunehmender Kraft durch, um so die Bremswirkung zu erhöhen und festzustellen, wann diese ausreicht, um den Reifen gegenüber seinem Antrieb zu blockieren.

Zu erkennen ist ein "Fenster" innerhalb des Diagramms, welches durch zwei Zeitpunkte t_{U1} und t_{U2} in seiner zeitlichen Dauer definiert ist. Nach oben ist das Fenster begrenzt durch eine maximale Kraft F_{Umax}, unterhalb derer eine Unrundheitsprüfung stattfinden soll. Nach unten ist das Fenster begrenzt durch die Kraft F_{Umin}, welche hier mit der Kraft F = 0 zusammenfällt. Das erfindungsgemäße Verfahren läuft nun wie folgt ab:
Zum Zeitpunkt t = 0 wird eine Bremskraft gemäß Verlauf B aufgebracht, die den entsprechenden Verlauf in Fig. 1 zeigt. Die Bremskraft berührt dabei das Fenster zur Bestimmung der Unrundheit nicht, sondern steigt steil an. Der Bremsversuch wird durch ein nicht näher beschriebenes Ereignis beendet. Eine Unrundheitsprüfung während dieses Bremsversuchs erfolgte nicht.

Ein weiterer Bremsversuch könnte dem Bremsverlauf gemäß Line A folgen. Dabei steigt die Bremskraft weniger stark an als nach Kurve B und erreicht so den Bereich des von t_{U1}, t_{U2}, F_{Umin} und F_{Umax} definierten "Fensters". Innerhalb dieses Fensters wird die Bremskraft etwa ab der Zeit t = 2s bis etwa zur Zeit t = 4,5s weitgehend konstant gehalten, um eine Unrundheitsprüfung durchzuführen. Da dieser konstante Bremskraftverlauf innerhalb des definierten Fensters liegt, erfolgt keine automatische Abschaltung des Bremsversuchs und dieser kann nach Verlassen des Fensters weitergeführt werden. Wird dagegen die Bremskraft außerhalb des Fensters über einen Zeitraum t_{B} im Wesentlichen konstant, jedenfalls aber innerhalb der Toleranzbreite (ΔF_{B}) gehalten, so wird dies als Abschaltkriterium erkannt und der Bremsversuch beendet.

Analog gilt dies für den Bremsversuch gemäß Verlauf C. Auch dort wird eine Unrundheitsmessung durchgeführt innerhalb des definierten Fensters und der Bremsversuch anschließend fortgesetzt.

Die definierten Wertebereiche gemäß Fig. 1 beschreiben einen speziellen Fall. Insbesondere ist es denkbar, den Toleranzbreite (ΔF_{B}) auch hinsichtlich seiner Lage, also seiner absoluten Werte mit Ober- und Untergrenze festzulegen. Dann erfolgt die Abschaltung der Bremsprüfung nur dann, wenn die Bremskraft den konstanten Verlauf innerhalb dieses festgelegten Wertebereiches zeigt.

## Patentansprüche

1. Verfahren zur Bremsprüfung an Kraftfahrzeugen, mit folgenden Verfahrensschritten:
a) Aufbringen einer Bremskraft (F) auf wenigstens ein angetriebenes Fahrzeugrad,
b) Abschaltung der Bremsprüfung, wenn die Bremskraft (F) während einer vorgebbaren Zeitspanne (t_{B}) innerhalb einer vorgebbaren Bremskraft-Toleranzbreite (ΔF_{B}) liegt,
**dadurch gekennzeichnet,**
c) **dass** die Abschaltung nach b) unterdrückt wird, solange die Bremskraft (F) während wenigstens einer vorgebbaren Zeitspanne (t_{U}) innerhalb wenigstens eines vorgebbaren Bremskraft-Wertebereichs (F_{Umin}; F_{Umax}) liegt.

2. Verfahren nach Anspruch 1, **dadurch gekennzeichnet, dass** die Zeitspanne (t_{U}) durch Vorgabe zweier fester Zeitpunkte (t_{U1}) und (t_{U2}) bestimmt wird.

3. Verfahren nach Anspruch 1 oder 2, **dadurch gekennzeichnet, dass** ein unterer absoluter Grenzwert der Toleranzbreite (ΔF_{B}) größer ist als Grenzwert (F_{Umax}).

4. Verfahren nach einem der Ansprüche 2 oder 3, **dadurch gekennzeichnet, dass** der Zeitpunkte (t_{U1}) größer Null ist.

5. Verfahren nach einem der vorhergehenden Ansprüche, **dadurch gekennzeichnet, dass** Zeitspanne (t_{U}) zwischen drei und fünf, vorzugsweise vier Sekunden beträgt.

6. Vorrichtung zur Bremsprüfung an Kraftfahrzeugen, insbesondere zur Durchführung eines der vorgenannten Verfahren, wobei die Vorrichtung zur Aufbringen einer Bremskraft (F) auf wenigstens ein angetriebenes Fahrzeugrad ausgebildet ist,
a) mit einer Steuereinheit, welche zur Abschaltung der Bremsprüfung ausgebildet ist, wenn die Bremskraft (F) während einer Zeitspanne (t_{B}) innerhalb einer vorgebbaren Toleranzbreite (ΔF_{B}) liegt,
**dadurch gekennzeichnet,**
b) **dass** die Steuereinheit zur Unterdrückung der Abschaltung nach a) ausgebildet ist, solange die Bremskraft (F) während wenigstens einer vorgebbaren Zeitspanne (t_{U}) innerhalb wenigstens eines vorgebbaren Bremskraft-Wertebereichs (F_{Umin}; F_{Umax}) liegt.
